# EUROPÄISCHE PATENTSCHRIFT

(11) **EP 0 909 742 B1**
(45) Veröffentlichungstag und Bekanntmachung des Hinweises auf die Patenterteilung: **08.01.2003**
(21) Anmeldenummer: 98118906.1
(22) Anmeldetag: 07.10.1998
(51) Int. Cl.: C03B 23/025

(54) **Vorrichtung zum Biegen von Flachglas**
Apparatus for bending sheet glass
Appareil pour le bombage de feuilles de verre

(30) Priorität: 10.10.1997 DE 19744875
(43) Veröffentlichungstag der Anmeldung: 21.04.1999
(73) Patentinhaber: Kramer, Carl, Prof.Dr.-Ing., 52076 Aachen (DE)
(72) Erfinder: Kramer, Carl, Prof.Dr.-Ing., 52076 Aachen (DE)
(74) Vertreter: Schwabe - Sandmair - Marx

(56) Entgegenhaltungen:
- EP-A- 0 024 979
- EP-A- 0 148 043
- DE-B- 1 679 961
- US-A- 4 226 608
- US-A- 4 773 925

## Beschreibung

Die Erfindung betrifft eine Vorrichtung zum zylindrischen Biegen von zunächst auf Erweichungstemperatur erwärmten, auf Rollen geführten Flachglasscheiben, wobei die Achse des Biegezylinders parallel zur Transportrichtung verläuft und der Biegevorgang während des Transports der Scheibe stattfindet.

Solche Vorrichtungen sind aus der DE-AS 16 79 961, der DE-PS 31 50 859 sowie der DE-PS 40 03 828 bekannt. Bei allen diesen Vorrichtungen liegt die zu biegende Scheibe bei Einleitung des Biegevorganges nur an den Rändern auf den Rollen auf und senkt sich vornehmlich durch Schwerkraftwirkung auf das unter der Scheibe von Rollen gebildete Formbett ab. Dazu ist es erforderlich, die Scheibe durch entsprechende Erwärmung derart zu erweichen, daß sie innerhalb der kurzen Biegezeit die durch das Formbett vorgegebene gewünschte Biegeform annehmen kann. Das Formbett wird bei der Vorrichtung nach der DE-PS 31 50 859 und der DE-PS 40 03 828 durch vorgebogene Rollen gebildet, auf welchen die Scheibe bei der Vorrichtung nach der DE-PS 31 50 859 durch Absenken eines geraden Rollenherdes und bei der Vorrichtung nach der DE-PS 40 03 828 durch Herabschwenken eines in der Mitte geteilten Bettes aus geraden Rollen abgelegt wird. Bei der Vorrichtung nach der DE-AS 16 79 961 wird das Formbett durch Verschwenken gebogener Rollen aus der Horizontalen nach unten gebildet.

Das zuvor geschilderte Problem stellt sich bei all diesen Vorrichtungen. Insbesondere bei größeren Scheibenlängen, bei welchen sich der zuerst in die Vorrichtung einlaufende Teil der Scheibe bereits merklich gegenüber dem zuletzt einlaufenden hinteren Teil abgekühlt haben kann, ergibt sich durch die Notwendigkeit, einerseits die Biegezeit so kurz wie möglich zu halten und andererseits die Scheibentemperatur nicht unnötig hoch zu wählen, vielfach für die Vorderkante und für die Hinterkante der Scheibe ein unterschiedlicher Biegeradius, der aus Qualitätsgründen nicht akzeptiert werden kann. Um diesem Nachteil abzuhelfen, wird bei den beschriebenen Vorrichtungen versucht, mit einer Andrückrolle die Scheibe während der Absenkbewegung auf das unter der Scheibe befindliche Formbett anzudrücken. Dabei muß sich die Andrückrolle mit der Scheibe absenken. Die Koordinierung dieser Bewegung ist äußerst schwierig und führt in der Regel zu erkennbaren Spuren, welche die Andrückrolle auf der Scheibe hinterläßt. Besonders für den gewünschten raschen Ablauf des Biegevorganges ist das Nachführen der Scheibe schwierig, da die Andruckkraft der Rolle auf der Scheibe, wenn die Rolle kinematisch dem Biegevorgang folgt, zu einer kaum erfaßbaren, veränderlichen Auflagekraft der Rolle auf der Scheibe infolge deren Massenträgheit führt. Das Einstellen der Andruckrolle ist folglich für Scheiben unterschiedlicher Breite und Dicke unterschiedlich und erschwert den Produktionsablauf.

Aus der US-A 4,575,389 sowie aus der US-A 5,201,928 gehen ebenfalls Vorrichtungen zum zylindrischen Biegen planarer Glasscheiben hervor. Bei der Vorrichtung nach der erstgenannten Druckschrift werden die zum Biegen verwendeten Transport- und Formstäbe derartig verschwenkt, daß die Ränder der Scheibe auf einer konstanten Höhenlage verbleiben. Die zweitgenannte Schrift beschreibt eine Verschwenkung, bei der die Mittellinie der Scheiben auf gleicher Höhe verbleibt.

Mit der Vorrichtung nach der Erfindung, wie sie durch den Patentanspruch 1 definiert wird, werden die beschriebenen Nachteile vermieden und dennoch die Einfachheit der bekannten Rollenbiegeeinrichtungen beibehalten. Dies geschieht erfindungsgemäß dadurch, daß eine Einrichtung vorgesehen ist, mittels derer gebogene, zu Beginn des Biegevorganges mit ihrer gebogenen Mittellinie in einer Horizontale liegenden Transport- und Biegerollen während des Biegevorganges um eine, die gebogene Mittellinie der Rollen in der Mitte tangierende horizontale Achse geschwenkt werden, wobei die Enden der gebogenen Rollen aus der gemeinsamen horizontalen Ebene nach oben schwenken. Alle Biegerollen der Vorrichtung sind mittels eines Gestänges miteinander verbunden, so daß der Schwenkvorgang für alle Rollen gleichzeitig erfolgt und ein Antrieb für die Schwenkbewegung eines Koppelungsgestänges ausreicht.

Die Unteransprüche beschreiben bevorzugte Ausführungsformen der Erfindung.

Beim Schwenken der Rollenenden nach oben unterstützt außer der Schwerkraft noch die Massenträgheit der Scheibe den Biegevorgang. Die Unterstützung des Biegevorganges durch die Trägheitskraft der Scheibe hat den Vorteil, daß die Scheibentemperatur niedriger gewählt werden kann als bei vergleichbaren Biegevorgängen. Dadurch ergibt sich eine bessere Qualität der Glasoberfläche.Zusätzlich kann eine in der Mitte der Scheibe befindliche Andrückrolle oder Andrückrollenleiste genau gegenüber dem Mittenbereich der gebogenen Rollen, deren Höhe sich nicht ändert, positioniert werden. Der bei den Vorrichtungen nach dem Stand der Technik bekannte nachteilige Walkeffekt, welcher dadurch zustande kommt, daß die Andruckrolle nicht immer genau über der unter der Andruckrolle befindlichen Formrolle liegt, wird folglich schon konstruktiv ausgeschlossen.

Ähnlich wie bei den bekannten Vorrichtungen ist es vorteilhaft, den gesamten Rollengang zu beheizen. Dies geschieht zweckmäßigerweise von unten, wobei bei der Biegevorrichtung nach der Erfindung, bei welcher die Biegung der Scheibe bei fester Rollenmitte durch Schwenken der Rollenenden nach oben erfolgt, die zur Beheizung der Biegevorrichtung dienenden Heizstrahler in kleinerem Abstand unter den Biegerollen angebracht werden können, was eine gezieltere und effizientere Beheizung des Rollenmantels ermöglicht.

Der Transport der Scheibe auf den gebogenen Rollen erfolgt in bekannter Weise durch einen mit entsprechender Umfangsgeschwindigkeit angetriebenen Rollenmantel, der auf den gebogenen Rollenkörpern rotiert. Die Übertragung der Drehbewegung von den z. B. mittels Kette oder Zahnriemen angetriebenen Antriebsrädern, deren Achse mit der Schwenkachse übereinstimmt, erfolgt vorteilhafter Weise über ein Zahnradgetriebe. Dieses Zahnradgetriebe überbrückt die Länge der Schwenkhebel, in welche auf beiden Seiten der Vorrichtung die gebogenen Wellen verlagert sind. Die Drehachse des Schwenkhebels ist wiederum identisch mit der Schwenkachse und der Achse des Antriebsrades.

Bei Scheiben mit größerem Seitenverhältnis, also größerem Verhältnis von Länge zu Breite, kann es erforderlich sein, die Scheibe während des Biegevorganges in der Biegevorrichtung an den Seiten zu führen. Hierzu können zwischen den nach oben schwenkenden Biegerollen auch auf die jeweilige Breite der zu biegenden Scheiben einstellbare Führungsrollen angeordnet sein, deren Drehachse senkrecht zur Scheibenebene steht. Es genügt in den meisten Fällen, diese Rollen leichtgängig und frei mitlaufend auszuführen und auf einen gesonderten Antrieb zu verzichten.

Bei größeren Arbeitsbreiten bietet die erfindungsgemäße Vorrichtung durch die Verschwenkung der gebogenen Rollen um eine die Rollenmittellinie in der Mitte tangierende Schwenkachse den Vorteil, daß die Wellen in der Mitte gelagert werden können und diese Lagerung starr mit dem Gestell der Vorrichtung verbunden sein kann. Außerdem ist es möglich, geteilte Rollen zu verwenden. Schließlich können die Rollen von der festgelagerten Mitte her angetrieben werden, wodurch sich der Antriebsmechanismus vereinfacht.

Aus der Biegevorrichtung wird die gebogene Scheiben in bekannter Weise in eine Vorspannstrecke transportiert, in welcher der Scheibe durch Schroffabkühlung die gewünschte Vorspannung erteilt wird. Bei Vorrichtungen für vergleichsweise große Krümmungsradien der gebogenen Scheiben kann diese Vorspannstrecke vorteilhaft aus einem geraden Rollengang, auf welchen die durch die Schroffabkühlung wieder verfestigte Scheibe mittig aufliegt, und seitlichen Stützrollen bestehen, die entsprechend der Biegeform der Scheibe eingestellt werden.

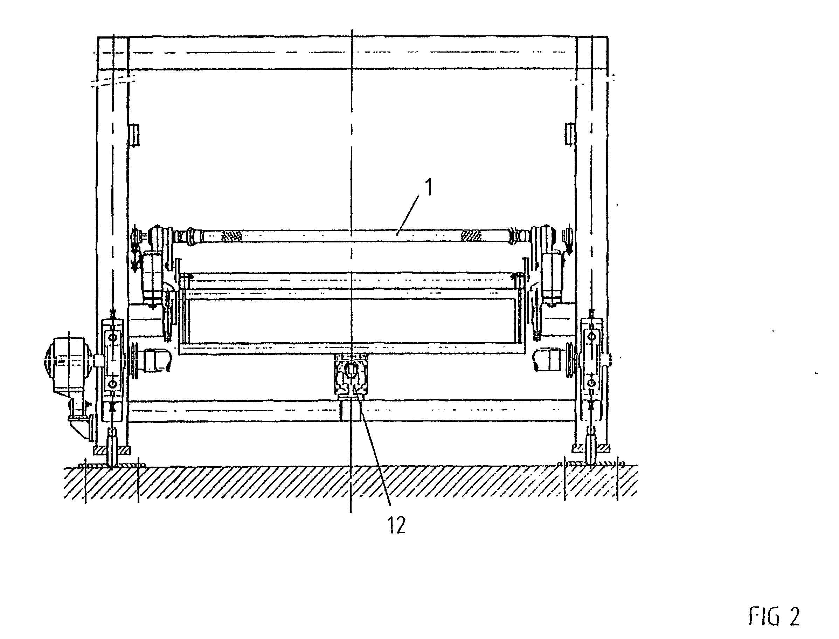

Die Vorrichtung gemäß der Erfindung wird im folgenden anhand von vorteilhaften Ausführungsbeispielen beschrieben. Diese Beschreibung wird durch die Figuren 1 bis 4 veranschaulicht. Es zeigen
- Figur 1: eine Seitenansicht,
- Figur 2: einen Querschnitt,
- Figur 3: eine Draufsicht der Vorrichtung nach der Erfindung und
- Figur 4: im oberen Teil einen Vertikalschnitt durch eine 90° nach oben geschwenkte gebogene Biegerolle und im unteren Teil eine Ansicht bei horizontaler Blickrichtung für eine Biegerolle in horizontaler Ausgangsposition.

Biegerollen 1 sind in bekannter Weise mit einem drehbaren Mantel 11 ausgestattet, der mit einem Abtriebszahnrad 4 fest verbunden ist. Bei größeren Arbeitsbreiten empfiehlt es sich, auf beiden Seiten der Vorrichtung derartige Abtriebszahnräder mit dem Rollenmantel 11 zu verbinden, um den Rollenmantel von beiden Rollenenden her anzutreiben und dadurch eine unsymmetrische Torsionsverformung zu vermeiden.

Mit einem Schwenkhebel 3 kann die gebogene Biegerolle um ihre Schwenkachse 2 gedreht werden. Im Schwenkhebel 3 ist eine mit Zahnrädern versehene Getriebewelle 5 verlagert, welche die Drehbewegung von einer Antriebswelle 6, auf welcher ein Antriebskettenrad 7 sitzt, zum Abtriebszahnrad 4 weiterleitet. Die Lagerung der Welle 6 ist auf einem Verlagerungsrahmen 9 montiert. Die Schwenkhebel 3 sind mit einem Kopplungsgestänge 19 miteinander verbunden, so daß die Schwenkbewegung für alle gebogenen Rollen gleichzeitig mit einem Antrieb bewerkstelligt werden kann.

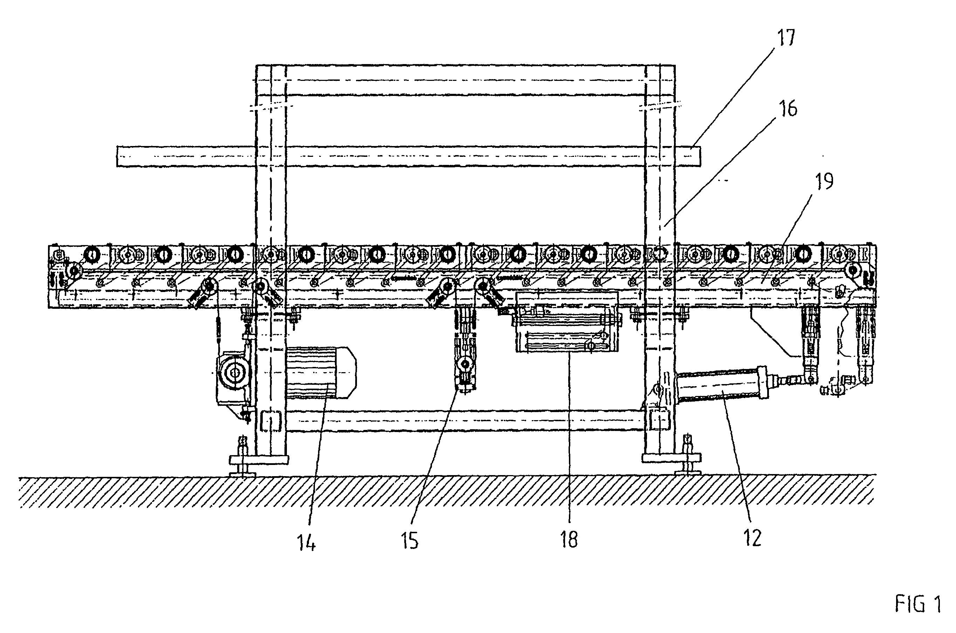

Die Schwenkhebel auf beiden Seiten einer Welle werden zweckmäßig durch eine Querverbindung 10 miteinander verbunden, so daß ein Antrieb, im Fall der Figur 1 ein Druckluftzylinder 12, zur Ausführung der Schwenkbewegung ausreicht. Die Schwenkbewegung kann entsprechend dem gewünschten Biegeradius mit Hilfe des Anschlags 18 begrenzt werden. Zum Antrieb dient ein Kettentrieb 8 mit einem Antriebsmotor 14. Zur Spannung der Kette ist eine Spannvorrichtung 15 vorgesehen. Der Verlagerungsrahmen wird von einem portalartigen Gestell 16 getragen, an welchem auch Halteprofile 17 für eine in den Figuren der Übersichtlichkeit halber nicht dargestellte Heizhaube mit üblichen Heizstrahlern befestigt sind. Der Zylinder 12 ist ebenfalls drehbar an dem Gestell 16 befestigt.

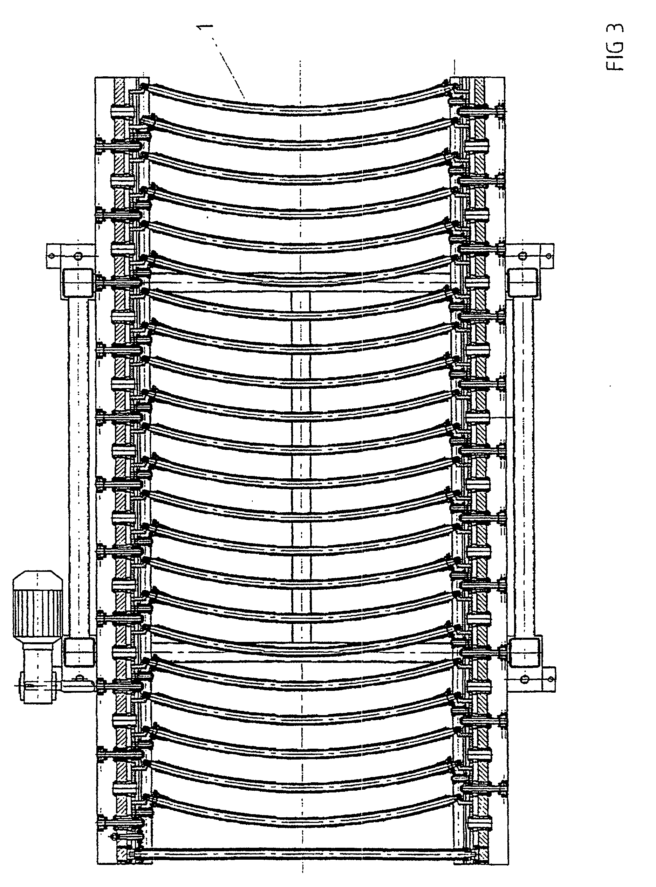

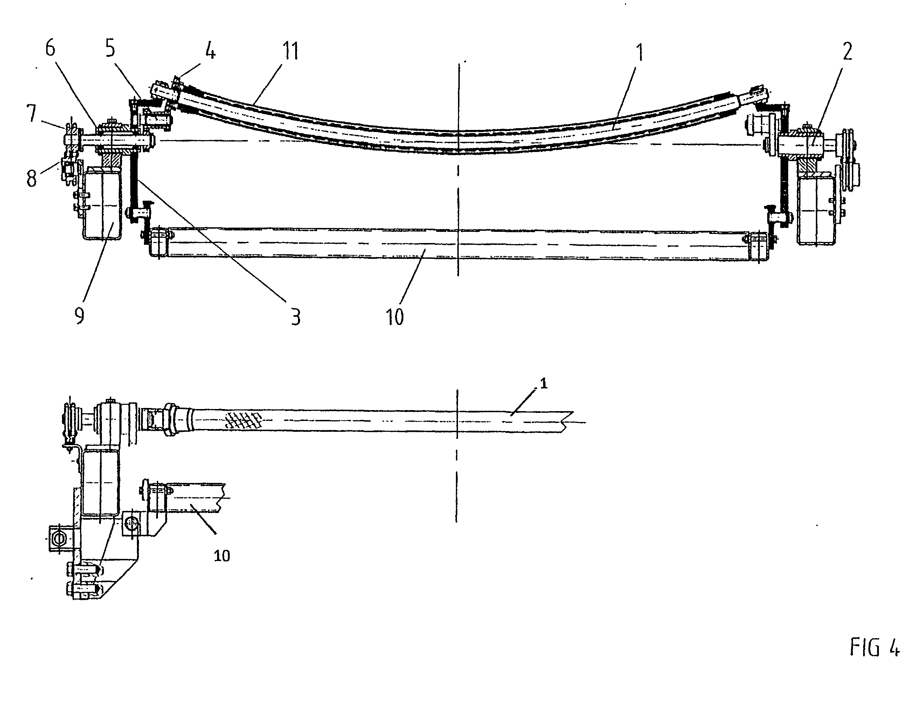

In der Draufsicht nach Figur 3 befinden sich die gebogenen Biegerollen 1 in der Ausgangsposition, d. h. ihre gebogenen Mittellinien bzw. Mittelebenen liegen alle in der gleichen horizontalen Ebene, welche der zu biegenden, im Ausgangszustand noch planen Glasscheibe parallel ist. Diese Situation ist für eine gebogene Biegerolle 1 im unteren Teil der Figur 4 dargestellt. Im oberen Teil der Figur 4 ist eine gebogene Biegerolle 1 bei maximaler Verschwenkung der Rollenenden nach oben dargestellt.

In der aus den Figuren 3 und 4, untere Darstellung, ersichtlichen Ausgangslage befinden sich die Mittelebenen aller gebogenen Biegerollen 1 in einer horizontalen Ebene, die parallel zu der zu biegenden, noch planen Glasscheibe ist.

Die erwärmte Glasscheibe wird nun auf die so gebildete, horizontale Ebene aufgelegt, und die gebogenen Biegerollen 1 werden um ihre Schwenkachsen 2 nach oben geschwenkt, bis sie die aus Figur 4, obere Darstellung, ersichtliche Lage erreichen, in der die oberen Flächen der gebogenen Biegerollen 1 eine Zylinderform erhalten, die der zylindrischen Form der gewölbten Glasscheibe entspricht. In dieser Lage tangieren die Schwenkachsen 2 der gebogenen Biegerollen 1 die Mittellinien der gebogenen Biegerollen 1 in der Mitte, wie man in Figur 4, obere Darstellung, erkennt.

Die Schwenkbewegung der gebogenen Biegerollen 1 um ihre Schwenkachsen 2 erfolgt in der Weise, daß die Rollenenden nach oben, also zur aufliegenden Glasscheibe hin, verschwenkt werden, wie aus den Figuren ersichtlich ist.

Die drehbaren Rollenmäntel 11 der gebogenen Biegerollen 1 werden entweder kontinuierlich oder zumindest zum Zeitpunkt des ersten Kontaktes mit der noch planen Glasscheibe gedreht, so daß einerseits keine Reibung zwischen den Rollenmänteln 11 und der Glasscheibe auftreten kann und andererseits diese Drehbewegung zum Transport der Glasscheibe durch die Biegevorrichtung benutzt werden kann.

Die Drehbewegung der Rollenmäntel 11 kann entweder an die Schwenkbewegung der gebogenen Biegerollen 1 angepaßt oder unter dem Gesichtspunkt eines möglichst schnellen Transportes der Glasscheiben durch die Biegevorrichtung ausgelegt werden.

Als Alternative zu den dargestellten Ausführungsformen können die Biegerollen 1 auch geteilt und in der Mitte gelagert sein. Wesentlich ist nur, daß die beschriebene Schwenkbewegung um Achsen möglich ist, welche die Mittellinien der gebogenen Biegerollen 1 in der Mitte tangieren.

Bei größeren Arbeitsbreiten und großen Stichhöhen der Wölbung der gebogenen Biegerollen, insbesondere Stichhöhen größer als die Teilung der Biegerollenlagerung, ist es zweckmäßig, die Biegerollen auf jeder Seite der Vorrichtung auf einem Balken zu verlagern und diese Balken mit jeweils mindestens zwei Schwenkhebeln auszurüsten, deren Schwenkachsen in der gleichen Ebene liegen, wie die Mittellinien der Biegerollen in deren Mitte. Bei dieser Ausführungsform ist es notwendig, die Enden der Biegerollen in bekannter Weise ebenfalls parallel zu diesen Schwenkachsen anzuordnen, was durch eine Krümmung der Enden der Biegerollen in der gleichen Ebene wie im Mittenbereich, jedoch in entgegengesetzte Richtung, leicht zu bewerkstelligen ist. Dadurch wird erreicht, daß die durch die Enden der Biegewellen gelegte Achse der Schwenkachse, welche die Mittellinie der Biegewelle in deren Mitte tangiert und um welche die Schwenksbewegung der Biegewelle erfolgt, parallel ist.

An dem Gestell 16 (siehe Figur 1) kann auch eine Andruckrolle, bzw. die Andruckrollenleiste befestigt werden. Diese Rollen, welche ein Abheben der Scheibe beim Biegevorgang von der Rollenmitte verhindern und somit den Biegevorgang unterstützen, sitzen in Rollenmitte auf der Glasscheibe auf, also genau da, wo sich bei der Schwenkbewegung die vertikale Position der gebogenen Rollen nicht ändert. Andruckrollen sind nicht notwendig und deshalb in den Figuren nicht dargestellt.

An diese Biegevorrichtung schließt sich in der Regel eine Vorspannstrecke (nicht dargestellt) an, die einen geraden Rollengang und seitliche Stützrollen aufweist.

## Patentansprüche

1. Vorrichtung zum zylindrischen Verwölben einer sich im Erweichungszustand befindenden planen Glasscheibe mittels die Wölbeform bestimmenden starren, gebogenen Biegerollen (1), deren gebogene Mittellinien sich zu Beginn des Wölbevorganges in einer Ebene parallel zur zu biegenden planen ,Glasscheibe befinden, **dadurch gekennzeichnet, dass** Einrichtungen vorgesehen sind, mittels derer die Verwölbung der Scheibe durch Schwenken der gebogenen Biegerollen (1) um Schwenkachsen (2), welche die Mittellinien der gebogenen Biegerollen (1) in deren Mitte tangieren, unter gleichzeitigem Anheben der Enden der gebogenen Biegerollen (1) zur zu biegenden Glasscheibe hin ermöglicht wird.

2. Vorrichtung nach Anspruch 1, **dadurch gekennzeichnet, dass** die gebogenen Biegerollen (1) einen um einen Rollenkern drehbaren Rollenmantel (11) aufweisen, welcher mittels einer Antriebseinrichtung (4, 5, 6) in eine für alle Biegerollen (1) der Vorrichtung gleiche Drehbewegung versetzt wird, wodurch die Glasscheibe während des Biegevorganges in Richtung der Achse des die Wölbeform beschreibenden Zylinders transportiert wird.

3. Vorrichtung nach einem der Ansprüche 1 oder 2, **dadurch gekennzeichnet, dass** die gebogenen Biegerollen (1) mit Schwenkhebeln (3) versehen sind, welche mit einem Koppelungsgestänge (19) miteinander verbunden sind, so dass die Schwenkbewegung für alle gebogenen Rollen gleichzeitig mit einem Antrieb (12) bewerkstelligt werden kann.

4. Vorrichtung nach Anspruch 3, **dadurch gekennzeichnet, dass** die Bewegung der Koppelungsstange (19) durch Anschläge (18) begrenzt ist, welche die endgültige Wölbeform der Glasscheibe definieren.

5. Vorrichtung nach mindestens einem der Ansprüche 2 bis 4, **dadurch gekennzeichnet, dass** der drehbare Rollenmantel (11) der gebogenen Biegerollen (1) von beiden Enden her angetrieben wird.

6. Vorrichtung nach mindestens einem der Ansprüche 1 bis 5, **dadurch gekennzeichnet, dass** die gebogenen Biegerollen (1) in ihrer Mitte gelagert sind.

7. Vorrichtung nach mindestens einem der Ansprüche 1 bis 6, **dadurch gekennzeichnet, dass** in der Mitte des Rollenganges aus gebogenen Biegerollen (1) während des Biegevorganges mindestens eine Andruckrolle über einer gebogenen Biegerolle (1) auf die zu biegende Glasscheibe aufgesetzt ist.

## Claims

1. A device for cylindrically curving a plane, softened sheet of glass using rigid, bent bending rollers (1) which define the curve shape and whose bent centre lines are situated, at the beginning of the curving process, in a plane parallel to the plane sheet of glass to be bent, **characterised in that** means are provided which enable the sheet to be curved by pivoting the bent bending rollers (1) about pivoting axes (2) centrally tangent to the centre lines of the bent bending rollers (1), while simultaneously lifting the ends of the bent bending rollers (1) towards the sheet of glass to be bent.

2. The device as set forth in claim 1, **characterised in that** the bent bending rollers (1) comprise a roller shell (11) which can rotate about a roller core and which is set in rotary motion by a drive means (4, 5, 6), said motion being the same for all the bent rollers (1) of the device, said sheet of glass thus being transported, during the bending process, in the direction of the axis of the cylinder describing the curve shape.

3. The device as set forth in claim 1 or 2, **characterised in that** the bent bending rollers (1) are provided with pivoting levers (3) connected to each other by a coupling linkage (19), such that the pivoting movement for all the bent rollers can be provided simultaneously by one drive (12).

4. The device as set forth in claim 3, **characterised in that** the movement of the coupling linkage (19) is restricted by stoppers (18) which define the final curve shape of the sheet of glass.

5. The device as set forth in at least one of claims 2 to 4, **characterised in that** the rotatable roller shell (11) of the bent bending rollers (1) is driven from both ends.

6. The device as set forth in at least one of claims 1 to 5, **characterised in that** the bent bending rollers (1) are centrally supported.

7. The device as set forth in at least one of claims 1 to 6, **characterised in that**, during the bending process, at least one pressing roller above a bent bending roller (1) is placed on the sheet of glass to be bent, in the centre of the roller assembly of bent bending rollers (1).

## Revendications

1. Dispositif pour cintrer en cylindre une vitre plane se trouvant à l'état de ramollissement, au moyen de rouleaux de cintrage (1) rigides et argués déterminant la forme cintrée, dont les lignes médianes arguées se trouvent au début de l'opération de cintrage dans un plan parallèle à la vitre plane à cintrer, **caractérisé en ce que** sont prévus des dispositifs au moyen desquels le cintrage de la vitre est rendu possible par pivotement des rouleaux de cintrage (1) argués autour d'axes de pivotement (2) qui sont tangents en leur milieu aux lignes médianes des rouleaux de cintrage (1) argués, en même temps que les extrémités des rouleaux de cintrage (1) argués sont relevées vers la vitre à cintrer.

2. Dispositif selon la revendication 1, **caractérisé en ce que** les rouleaux de cintrage (1) argués comportent une enveloppe de rouleau (11) pouvant tourner autour d'un noyau de rouleau, laquelle est mise en un mouvement de rotation identique pour tous les rouleaux de cintrage (1) du dispositif, au moyen d'un mécanisme d'entraînement (4, 5, 6), ce qui fait que pendant l'opération de cintrage, la vitre est transportée en direction de l'axe du cylindre qui définit la forme cintrée.

3. Dispositif selon l'une des revendications 1 ou 2, **caractérisé en ce que** les rouleaux de cintrage (1) argués sont pourvus de leviers de pivotement (3) qui sont reliés entre eux par une tringlerie d'accouplement (19), ce qui fait que le mouvement de pivotement peut être réalisé en même temps au moyen d'un mécanisme d'entraînement (12), pour tous les rouleaux argués.

4. Dispositif selon la revendication 3, **caractérisé en ce que** le mouvement de la tringlerie d'accouplement (19) est limité par des butées (18) qui définissent la forme cintrée définitive de la vitre.

5. Dispositif selon l'une au moins des revendications 2 à 4, **caractérisé en ce que** l'enveloppe de rouleau (11) rotative des rouleaux de cintrage (1) argués est entraînée à partir des deux extrémités.

6. Dispositif selon l'une au moins des revendications 1 à 5, **caractérisé en ce que** les rouleaux de cintrage (1) argués sont supportés en leur centre.

7. Dispositif selon l'une au moins des revendications 1 à 6, **caractérisé en ce qu'**au milieu du train de rouleaux constitué des rouleaux de cintrage (1) argués, au moins un rouleau de pression est appliqué, pendant l'opération de cintrage, sur la vitre à cintrer, par l'intermédiaire d'un rouleau de cintrage (1) argué.
